# EUROPEAN PATENT APPLICATION

(11) **EP 0 766 083 A2**
(43) Date of publication of application: **02.04.1997**
(21) Application number: 96306909.1
(22) Date of filing: 23.09.1996
(51) Int. Cl.: G01N 23/223

(54) **X-ray fluorescence inspection apparatus and method**

(30) Priority: 28.09.1995 GB 9519771
(71) Applicant: OXFORD ANALYTICAL INSTRUMENTS LIMITED, Witney, Oxon. OX8 1TL (GB)
(72) Inventor: Anderson, Robin John, Oxon, OX8 5FF (GB); Ellis, Andrew Timothy, Abingdon, Oxon, OX14 4AY (GB); Field, Kenneth Malcolm, Witney, Oxon, OX8 8DF (GB)
(74) Representative: Skone James, Robert Edmund

(57) **Abstract**

X-ray fluorescence inspection apparatus comprises an X-ray source (1) for generating X-rays having a range of energies which are directed towards a sample position (3). A filter assembly (30) is mounted between the X-ray source (1) and the sample position (3) and is movable between at least two positions to enable the energy band of X-rays reaching the sample position to be controlled in two different ways. At least one wavelength dispersive monitor (17) is tuned to detect fluorescent X-rays within a predetermined wavelength range from a sample at the sample position (3) and an energy dispersive monitor (16) monitors fluorescent X-rays from a sample at the sample position. A variable size aperture (26) is provided through which fluorescent X-rays from a sample at the sample position pass to reach the energy dispersive monitor (16).

## Description

The invention relates to X-ray fluorescence inspection apparatus for use, for example, in determining the presence of one or more chemical elements within samples.

Conventionally, X-ray fluorescence inspection apparatus for simultaneous measurements has used one of two types of detection system. In the first type of detection system, a range of one of more wavelength dispersive monitors is provided, each tuned to a particular wavelength. An example of apparatus incorporating such detectors is the QX manufactured by Oxford Instruments Industrial Analysis Group. These detectors have a relatively high resolution but have to be tuned to a specific chemical element.

The second type of detector uses an energy dispersive monitor which monitors the fluorescent X-rays received over a wide wavelength band and is able to identify the presence of more than one element. Energy dispersive monitors can operate at higher resolution than wavelength dispersive monitors for high atomic number elements but at low resolution for low atomic number elements. An example of an energy dispersive monitor based system is the ED 2000 manufactured by Oxford Instruments Industrial Analysis Group.

There is a need to provide apparatus and a method for analyzing samples of unknown elemental content over a wide range of atomic numbers and concentrations. It has been found that wavelength dispersive detectors are more efficient at detecting X-ray fluorescence from relatively light elements while energy dispersive detectors are more efficient at detecting X-ray fluorescence from relatively heavy elements. However, the two types of system are generally incompatible. Energy dispersive detection requires a narrow range of X-ray beam energies to impinge on the sample while the beam power needs to be high for the wavelength dispersive detectors which are relatively inefficient because they are only detecting a narrow range of energies but low for the energy dispersive detector which is much more efficient because it detects the entire spectrum of energies from the sample.

In accordance with one aspect of the present invention, X-ray fluorescence inspection apparatus comprises an X-ray source for generating X-rays having a range of energies which are directed towards a sample position; a filter assembly mounted between the X-ray source and the sample position and movable between at least two positions to enable the energy band of X-rays reaching the sample position to be controlled in two different ways; at least one wavelength dispersive monitor tuned to detect fluorescent X-rays within a predetermined wavelength range from a sample at the sample position; an energy dispersive monitor for monitoring fluorescent X-rays from a sample at the sample position; and means defining a variable size aperture through which fluorescent X-rays from a sample at the sample position pass to reach the energy dispersive monitor.

We have devised a new X-ray fluorescence inspection apparatus in which it has been possible to combine one or more wavelength dispersive monitors and an energy dispersive monitor into the same unit. This has been achieved by providing a filter assembly between the X-ray source and the sample position which can be adjusted depending upon whether the wavelength or energy dispersive monitors or both are being used; and a variable size aperture in front of the energy dispersive monitor to control the intensity of incoming fluorescent X-rays. Thus, if a relatively low absorbing power filter (e.g. 0.05mm Al) has been positioned in the path of the X-rays from the source then the variable aperture will be set at a small size to avoid saturation of the electronics associated with the energy dispersive detector while if a strongly absorbing filter (e.g. 0.25mm Cu) has been provided in the path of the X-rays from the source then the variable aperture will be opened to a larger size.

The or each wavelength dispersive monitor may be selected to detect fluorescent X-rays due to elements from within the range of elements which can be detected by the energy dispersive monitor. However, preferably, the or each wavelength dispersive monitor is adapted to monitor fluorescent X-rays arising from relatively light elements and the energy dispersive monitor is adapted to monitor fluorescent X-rays arising from relatively heavy elements.

In accordance with a second aspect of the present invention, a method of determining the elemental content of a sample comprises irradiating the sample with X-rays having a range of energies to cause elements within the sample to generate fluorescent X-rays; detecting fluorescent X-rays due to relatively light elements using one or more wavelength dispersive monitors; and detecting fluorescent X-rays due to relatively heavy elements using an energy dispersive monitor; and analyzing the detected fluorescent X-rays to determine the elemental content of the sample.

By light elements we mean typically elements having atomic numbers less than that of calcium.

Conveniently, the monitors are arranged around a circular locus although other arrangements are also possible. However, the circular arrangement enables a very compact unit to be constructed, particularly where the X-ray source is positioned centrally with respect to the monitors.

Preferably, the apparatus further comprises a fixed size aperture between the sample position and the variable size aperture through which fluorescent X-rays pass to reach the energy dispersive monitor. This fixed aperture reduces the risk of stray radiation reaching the energy dispersive monitor.

The filter assembly may be provided with a set of filters defining different wavelength ranges so as to control the wavelength band passing to the sample position but conveniently further includes an aperture containing no filter. This aperture will be placed in position when the wavelength dispersive monitor(s) is being used. Alternatively, one of the positions to which the filter assembly can be moved could simply remove the filter assembly completely from the beam path.

Although the filter assembly could be implemented in a variety of ways, for example using a sliding element and the like, preferably the filter assembly is rotatable between the at least two positions.

The integration of the monitors into a single unit is particularly convenient from the point of view of processing. Thus, although each monitor could be connected to a separate processor for determining the elements being detected by that monitor, preferably the apparatus further comprises common processing means connected to the wavelength dispersive and energy dispersive monitors and adapted to analyze the outputs from each monitor and provide an output indicating the quantity of each element detected.

The positioning of the filter assembly and alteration of the size of the variable size aperture could be controlled manually by the operator but preferably the apparatus further comprises control means for controlling operation of the filter assembly and the variable size aperture. This enables the system to operate in an automatic manner with very little operator intervention.

In some examples, the control means may be coupled to the processing means so that there is a degree of feedback between the two.

The use of common processing means leads to a particularly advantageous method of analyzing the detected fluorescent X-rays. Thus, preferably, the analyzing step comprises obtaining data representing the intensity of the fluorescent X-rays from all the monitors; combining the data in accordance with the wavelengths of the fluorescent X-rays; and then determining the elemental content of the sample from the combined data.

With this method, the intensities determined by all the monitors are combined together effectively into a single data set which can then be analyzed. This helps particularly where the presence of one element can effect the X-ray fluorescence of another or where one region of the spectrum can be used to correct another. For example, the presence of potassium which would be sensed using a wavelength dispersive monitor can effect the X-ray fluorescence due to calcium which would be detected using the energy dispersive monitor.

Preferably, the combined data are converted to elemental content by means of fundamental parameter calculation which is a procedure well known in the art.

An example of an X-ray fluorescence inspection apparatus according to the invention and a method for its use will now be described with reference to the accompanying drawings, in which:-
Figure 1 is a cross-section through the apparatus; and,
Figure 2 is a block diagram of the processing and control apparatus.

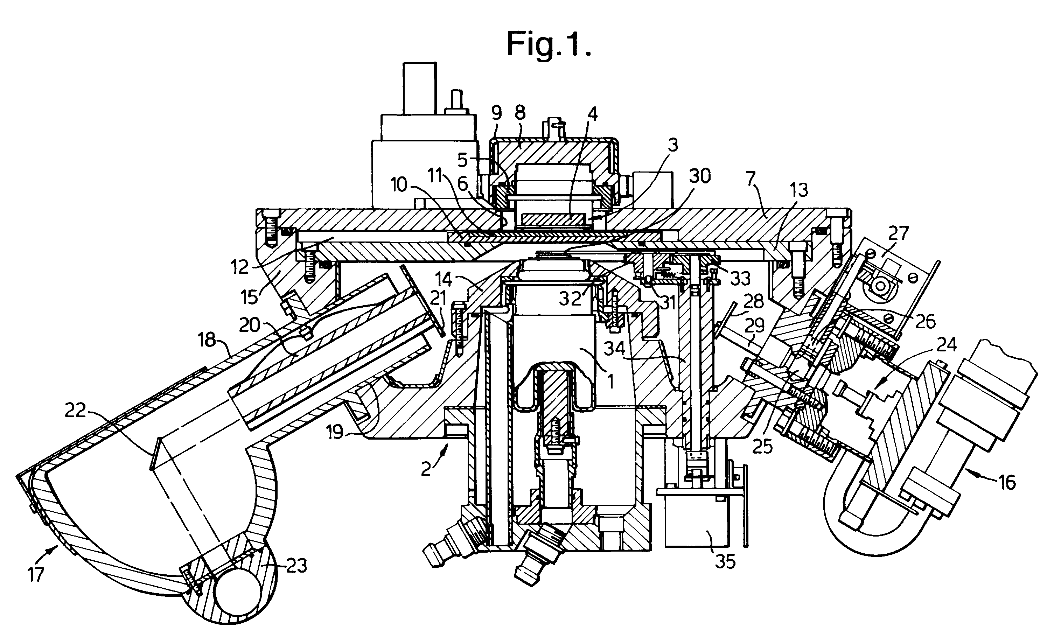

The apparatus shown in Figure 1 comprises an X-ray tube source 1 such as an EG50 manufactured by Varian Inc and which generates X-rays with energies up to 50 KeV. This is mounted in a sealed spectrometer 2 and generates X-rays in the form of a beam which are fed to a sample position 3 at which a sample 4 can be positioned. The sample 4 is supported on a carrier 5 which is fixed to a top loading plate 7 and has an aperture 6. The carrier 5 is sealed to a lid 8 which is attached to a support 9.

Slidably mounted under the top plate 7 is a shutter plate 10 on which is mounted a radiation shield 11. When a sample is to be inserted or extracted from the carrier 5, the shutter 10 is slid along a space 12 defined between the top plate 7 and an intermediate plate 13 into the position shown in Figure 1 so as to prevent any X-rays from the tube 1 passing through the aperture 3. Once the sample has been placed in position and the lid 8 securely closed, the shutter plate 10 is moved laterally to the left, as seen in Figure 1, so that X-rays from the tube 1 can reach the sample 4.

The X-ray tube 1 is supported in position by a mounting plate 14 secured to an outer, generally circular housing 15.

Spaced apart around the circumference of the housing 15 are a number of X-ray fluorescence monitors. These include a single energy dispersive monitor 16 and a number of wavelength dispersive monitors 17. In Figure 1, only a single wavelength dispersive monitor 17 can be seen. Each wavelength dispersive monitor 17 has a conventional construction and includes a generally tubular housing 18 which is inserted through an aperture 19 in the spectrometer housing 15. Coaxially mounted within the tubular section 18 is a primary collimator 20, the leading end of which carries a shielding disc 21. Downstream of the collimator 20 is a dispersing crystal 22 which is angularly oriented so that only certain wavelengths are directed towards a detector 23. Each wavelength dispersive monitor 17 will have a similar construction but with the geometric arrangement suitably adjusted to convey only those wavelengths to which the monitor is to respond towards the respective detector 23.

The energy dispersive monitor 16 comprises a semiconductor detector 24 which is aligned with an aperture 25 whose size can be varied by suitably controlling a shutter 26 using a stepper motor 27. A plate 28 is mounted via a support 29 in front of the monitor 16 and includes a fixed size aperture (not shown) through which X-rays must pass in order to reach the aperture 25 and be detected. The purpose of the fixed aperture is to prevent stray radiation, not directly generated by the sample 4, from reaching the monitor 16.

A primary filter carrier 30 is mounted at its centre to a rotatable support 31 carrying a gear 32 which meshes with a gear 33 on a drive pillar 34. The filter carrier 30 has six circumferentially spaced apertures (not shown), in five of which are positioned respectively different filters while the sixth is left open. The drive pillar 34 is connected to a stepper motor 35 which can be controlled to rotate the gear 33 and hence the gear 32 so as to rotate the carrier 30 and bring a chosen aperture into alignment with the X-ray tube 1.

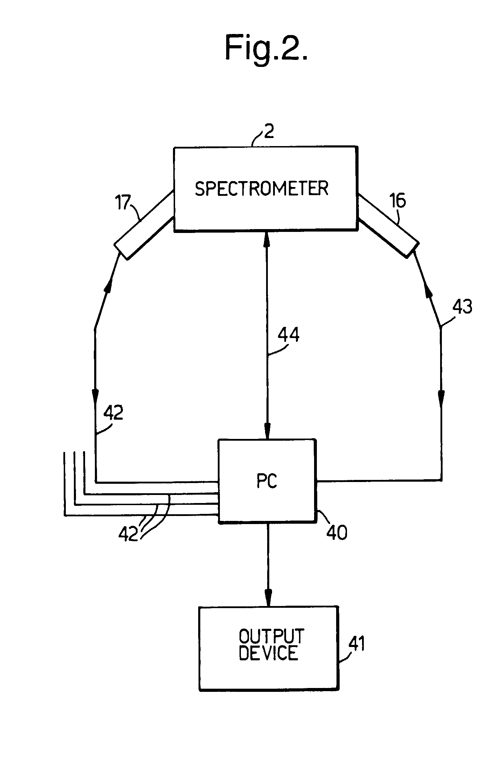

The spectrometer is controlled by a suitably programmed microprocessor or PC 40 (Figure 2) which receives intensity information from each wavelength dispersive monitor 17 via links 42 and the energy dispersive monitor 16 via a link 43. The processor assembles this intensity information together in accordance with the wavelength concerned and then carries out an analysis in a conventional manner to generate information concerning the elements which have caused X-ray fluorescence at each wavelength and this information is then sent to an output device 41. The device 41 could be a monitor display, a printer, and/or a digital store.

The PC 40 also generates control signals on links 42, 43 and on a link 44 which is connected to the spectrometer 2. The links 42-44 are shown schematically in Figure 2 and could be implemented in a variety of ways as is well known in the art. The PC 40 controls and senses various parameters via the links 42,43. These include controlling the high voltage detector within each wavelength dispersive monitor 17; controlling and sensing the position of the variable aperture of the energy dispersive monitor 16, controlling and sensing the high voltage applied to the detector in the monitor 16, and controlling and sensing the processing electronics within the monitor 16; and, in connection with the spectrometer 2, controlling the position of the filter carrier 30, the shutter plate 10 and the lid 8 and controlling and sensing other conventional parameters of the spectrometer. The additional spectrometer parameters will include monitoring the existence of a vacuum or the presence of gas within the spectrometer depending upon the sample being inspected, temperature control and autosampler control if this is fitted.

In a typical operation, a sample 4 is loaded manually or by means of an automatic loader (not shown) onto the sample carrier 5 and the lid 8 is closed. The shutter plate 10 is retracted and the PC 40 activates the source 1. The PC 40 also positions the filter carrier 30 as appropriate and controls and senses all other spectrometer parameters. Initially, information will be obtained from the wavelength dispersive monitors 17 and so the filter carrier 30 will be positioned such that the open aperture is aligned with the tube 1 and the PC 40 then receives intensity data from each of the wavelength dispersive monitors 17. These data are stored. Once sufficient data have been collected, the PC 40 will cause the carrier 30 to rotate to bring a suitable filter into alignment with the tube 1 and, if necessary, adjust the size of the aperture 25. For example, if a relatively high absorbence filter is brought into position then the aperture 25 will be set to a wide position whereas if a relatively low absorbence filter is used then the aperture will be set to a narrow position. In this way, the power reaching the semiconductor detector can be maintained at a relatively low level. The PC 40 then collects intensity data from the energy dispersive monitor 16 which is stored in the PC 40. The PC 40 analyzes the intensity data in a conventional manner to obtain information relating to the elements which have caused the X-ray fluorescence and this information is then output to the output device 41. During monitoring by the energy dispersive device, the PC 40 will also adjust the control voltage and current to the tube 1 as required, in a conventional manner.

Although the monitors are described here as being used sequentially, they could be operated simultaneously with a suitable filter and aperture setting.

In one specific example, making use of fundamental parameter analysis, eight wavelength dispersive monitors or monochromators 17 are provided. Each one is dedicated to one specific element, the set comprising sodium, magnesium, aluminium, silicon, phosphorus, sulphur, chlorine and potassium. These are the "light elements".

Stored in the PC 40 is a set of theoretical intensities for the light elements that was initially derived by theory as is well known in the art. These theoretical intensities were modified using measurements on four synthetic glass samples of known composition to obtain a set of reference intensities.

The energy dispersive monitor 16 can measure elements from calcium to uranium and again has a set of theoretical intensities for these "medium and heavy" elements that are initially derived by theory and then modified in accordance with a detector sensitivity function, the modified intensities then being confirmed by measurements on selected pure element samples.

The intensity data derived in use are, as mentioned above, combined into a single set of data which is then compared with the reference intensities previously stored and the different elements can be identified.

Although in an ideal situation all eight wavelength dispersive monitors are used, in practice it is possible not to detect an element if it is not at significant concentration in the sample of interest. For example, when metal materials are to be analyzed there is no need to have wavelength dispersive monitors for sodium, chlorine and potassium since these elements are insignificant in the composition of metals and alloys.

## Claims

1. X-ray fluorescence inspection apparatus comprising an X-ray source (1) for generating X-rays having a range of energies which are directed towards a sample position (3); a filter assembly (30) mounted between the X-ray source (1) and the sample position (3) and movable between at least two positions to enable the energy band of X-rays reaching the sample position to be controlled in two different ways; at least one wavelength dispersive monitor (17) tuned to detect fluorescent X-rays within a predetermined wavelength range from a sample at the sample position (3); an energy dispersive monitor (16) for monitoring fluorescent X-rays from a sample at the sample position; and means (26) defining a variable size aperture through which fluorescent X-rays from a sample at the sample position pass to reach the energy dispersive monitor (16).

2. Apparatus according to claim 1, wherein the or each wavelength dispersive monitor (17) is used to monitor fluorescent X-rays due to relatively light elements and the energy dispersive monitor (16) is adapted to monitor fluorescent X-rays due to relatively heavy elements.

3. Apparatus according to claim 1 or claim 2, wherein the monitors (16,17) are arranged around a circular locus.

4. Apparatus according to any of the preceding claims, wherein the X-ray source (1) is positioned centrally with respect to the monitors (16,17).

5. Apparatus according to any of the preceding claims, further comprising a fixed size aperture (28) between the sample position (3) and the variable size aperture (26) through which fluorescent X-rays pass to reach the energy dispersive monitor (16).

6. Apparatus according to any of the preceding claims, wherein the filter assembly (30) includes an aperture containing no filter.

7. Apparatus according to any of the preceding claims, wherein the filter assembly (30) is rotatable between the at least two positions.

8. Apparatus according to any of the preceding claims, further comprising a stepper motor (35) for controlling movement of the filter assembly.

9. Apparatus according to any of the preceding claims, further comprising common processing means (40) connected to the wavelength dispersive and energy dispersive monitors (16,17) and adapted to analyze the outputs from each monitor and provide an output indicating the quantity of each element detected.

10. Apparatus according to any of the preceding claims, further comprising control means (40) for controlling operation of the filter assembly (30) and the variable size aperture (26).

11. Apparatus according to claim 10, when dependent on claim 9, wherein the control means is coupled to the processing means.

12. A method of determining the elemental content of a sample, the method comprising irradiating the sample (4) with X-rays having a range of energies to cause elements within the sample to generate fluorescent X-rays; detecting fluorescent X-rays due to relatively light elements using one or more wavelength dispersive monitors (17); and detecting fluorescent X-rays due to relatively heavy elements using an energy dispersive monitor (16); and analyzing the detected fluorescent X-rays to determine the elemental content of the sample.

13. A method according to claim 12, wherein the analyzing step comprises obtaining data representing the intensity of the fluorescent X-rays from all the monitors (16,17); combining the data in accordance with the wavelengths of the fluorescent X-rays; and then determining the elemental content of the sample from the combined data.

14. A method according to claim 13, wherein the combined data are converted to elemental content by means of fundamental parameter calculation.

15. A method according to any of claims 12 to 14, wherein the relatively light elements have atomic numbers less than that of calcium.

16. A method according to any of claims 12 to 15, wherein the method is carried out using apparatus according to any of claims 1 to 11.
